# FASCICULE DE BREVET EUROPEEN

(11) **EP 2 736 774 B1**
(45) Date de publication et mention de la délivrance du brevet: **14.10.2015**
(21) Numéro de dépôt: 12731403.7
(22) Date de dépôt: 27.06.2012
(51) Int. Cl.: B60S 1/04

(54) **DISPOSITIF, ENSEMBLE DE MAINTIEN ET PROCÉDÉ DE MONTAGE D'UNE PAIRE DE BALAIS D'ESSUIE-GLACES**
UNTERSTÜTZUNGSVORRICHTUNG UND -ANORDNUNG SOWIE VERFAHREN ZUR MONTAGE EINES PAARS VON WISCHBLÄTTERN
SUPPORTING DEVICE AND ASSEMBLY, AND METHOD FOR MOUNTING A PAIR OF WIPER BLADES

(30) Priorité: 27.07.2011 FR 1156860
(43) Date de publication de la demande: 04.06.2014
(73) Titulaire: Valeo Systèmes d'Essuyage, 78321 Le Mesnil Saint Denis (FR)
(72) Inventeur: JEHANNET, Jean-Pierre, F-27200 Vernon (FR); VERET, Jocelyn, F-27150 Etrepagny (FR)
(74) Mandataire: Léveillé, Christophe
(86) Numéro de dépôt international: PCT/EP2012/062418
(87) Numéro de publication internationale: WO 2013/013926

(56) Documents cités:
- WO-A2-2010/037541
- FR-A1- 2 900 133

## Description

La présente invention concerne un dispositif de maintien d'une paire de balais d'essuie-glaces. L'invention concerne également un ensemble de maintien comportant un ou une pluralité de dispositifs de maintien, ainsi qu'un procédé de montage correspondant.

Le dispositif de maintien logeant les balais d'essuie-glace est par exemple destiné à être utilisé en vue de la commercialisation dans des rayonnages de magasins, d'un kit de remplacement d'une paire de balais d'essuie-glaces d'un véhicule ou en vue du transport d'une paire de balais d'essuie-glaces depuis le lieu de sa production vers le lieu de son conditionnement ou vers le lieu de son assemblage sur un véhicule automobile.

Un tel dispositif est par exemple décrit dans la demande de brevet français publiée sous le numéro FR 2 900 133. Pour fixer les balais d'essuie-glace dans ce dispositif en forme de rail, on positionne un premier balai en vis-à-vis d'un premier canal ouvert du dispositif, sa lame d'essuyage étant dirigée vers l'intérieur de ce canal. On applique alors une pression dans une direction normale à un plan médian du rail, vers le fond du premier canal, pour une fixation du balai par emboîtage élastique d'un élément de structure dans des moyens de retenue disposés par paires à différents endroits du premier canal. Puis, on retourne l'ensemble constitué par le premier balai fixé au dispositif de maintien pour procéder à la fixation d'un second balai d'essuie-glace dans un second canal du dispositif de maintien.

Le document WO 2010/037541 décrit le préambule de la revendication 1.

L'invention propose une solution de conditionnement d'une paire de balais d'essuie-glaces permettant de simplifier le procédé de montage avec un encombrement réduit.

A cet effet, la présente invention a pour objet un dispositif de maintien d'une paire de balais d'essuie-glaces comportant une première et une deuxième rainures de maintien respectivement munies de moyens de retenue par emboîtage élastique d'au moins un élément de structure à extension latérale de deux balais respectifs, caractérisé en ce que les rainures de maintien sont disposées côte à côte avec une paroi commune, les rainures de maintien présentant deux ouvertures respectives débouchant dans des plans parallèles et décalés, la deuxième rainure de maintien étant agencée au-dessus de la première rainure de maintien et présentant une forme sensiblement évasée, lesdites ouvertures appartenant à un même côté du dispositif de maintien.

Selon une ou plusieurs caractéristiques du dispositif de maintien, prise seule ou en combinaison :
- le fond de la deuxième rainure de maintien est agencé sensiblement à hauteur des moyens de retenue de la première rainure de maintien,
- les moyens de retenue comprennent deux paires de pattes élastique d'accrochage ménagées longitudinalement dans les rainures de maintien respectives et pouvant coopérer deux à deux pour clipper au moins un élément de structure à extension latérale des balais d'essuie-glace,
- les moyens de retenue comprennent un épaulement longitudinal prévu entre chaque paire de pattes élastique d'accrochage, pouvant coopérer avec une patte élastique d'accrochage pour clipper au moins un élément de structure à extension latérale du balai d'essuie-glace,
- le dispositif de maintien comporte une paroi de renfort raccordant entre eux les fonds les deux rainures de maintien,
- le dispositif de maintien est réalisé d'une seule pièce par extrusion, injection plastique ou thermoformage,
- le dispositif de maintien est constitué d'un matériau plastique,
- le dispositif de maintien est constitué de deux éléments solidarisés entre eux par collage, soudure, par emboîtement ou par clippage,
- l'élément de structure à extension latérale d'un balai d'essuie-glace peut par exemple être formé d'une vertèbre du balai du balai d'essuie-glace ou d'une excroissance latérale de la monture de support du balai d'essuie-glace.

L'invention a aussi pour objet un ensemble de maintien d'une paire de balais d'essuie-glaces comprenant : une paire de balais d'essuie-glaces et une pluralité de dispositifs de maintien tels que décrit précédemment, répartis sur la longueur de la paire de balais d'essuie-glaces.

L'invention a encore pour objet un emballage pour une paire de balais d'essuie-glaces comportant un dispositif de maintien tel que décrit précédemment.

L'invention a encore pour objet un procédé de montage d'une paire de balais d'essuie-glaces dans un dispositif de maintien tel que décrit précédemment caractérisé en ce qu'il comporte les étapes suivantes :
- fixer un premier des deux balais au dispositif de maintien par insertion du premier balai selon une première direction d'insertion dans une première rainure de maintien,
- fixer le second des deux balais au dispositif de maintien comprenant le premier balai par insertion du deuxième balai selon une deuxième direction d'insertion en provenance du même côté que la première direction d'insertion, dans une deuxième rainure de maintien.

Selon un exemple de réalisation du procédé de montage, les balais d'essuie-glace sont montés tête-bêche dans le dispositif de maintien.

L'agencement des rainures de maintien permet l'insertion de la paire de balais depuis le dessus du dispositif de maintien, ce qui permet de gagner du temps. En effet, le monteur gagne une étape d'assemblage dans le procédé de montage de la paire de balais dans le ou les dispositifs de maintien par rapport aux dispositifs de l'art antérieur pour lesquels le dispositif devait être retourné après la fixation d'un premier des deux balais pour la fixation du deuxième balai.

En outre, la forme et l'agencement décalé des rainures de maintien rapproche les balais d'essuie-glace entre eux, ce qui permet de réduire l'encombrement latéral de l'ensemble de maintien comportant les balais d'essuie-glace. Le conditionnement de l'ensemble de maintien en étui est ainsi facilité.

Le maintien des balais par au moins un élément de structure à extension latérale d'un balai est particulièrement judicieux car le maintien peut alors être adapté à plusieurs type de balais, notamment les premières et secondes générations de balais plats, mais aussi pour des balais plats de structure différente. Par élément de structure, on entend, vertèbre, monture de support, déflecteur ou tout autre élément formant le balai d'essuie-glace.

Par ailleurs, le dispositif de maintien est commun à plusieurs formes de réalisation de balais d'essuie-glaces.

D'autres caractéristiques et avantages de l'invention ressortiront de la description suivante, donnée à titre d'exemple, sans caractère limitatif, en regard des dessins annexés sur lesquels :
- la figure 1 représente une vue en perspective de côté de deux portions de balai d'essuie-glaces selon un premier mode de réalisation en cours de montage dans un dispositif de maintien,
- la figure 2 représente une vue sensiblement de face des deux portions de balai d'essuie-glaces et du dispositif de maintien de la figure 1,
- la figure 3 représente une vue en perspective de côté des deux portions de balai d'essuie-glaces de la figure 1 montés dans le dispositif de maintien,
- la figure 4 représente une vue sensiblement de face des deux portions de balai d'essuie-glaces et du dispositif de maintien de la figure 3,
- la figure 5 représente une vue en perspective de côté de deux portions de balai d'essuie-glaces selon un deuxième mode de réalisation en cours de montage dans le dispositif de maintien,
- la figure 6 représente une vue sensiblement de face des deux portions de balai d'essuie-glaces et du dispositif de maintien de la figure 5,
- la figure 7 représente une vue en perspective de côté des deux portions de balai d'essuie-glaces de la figure 5 montés dans le dispositif de maintien,
- la figure 8 représente une vue sensiblement de face des deux portions de balai d'essuie-glaces et du dispositif de maintien de la figure 7, et
- la figure 9 représente une vue en coupe d'un emballage pour une paire de balais d'essuie-glaces montés dans le dispositif de maintien.

Sur ces figures, les éléments identiques portent les mêmes numéros de référence.

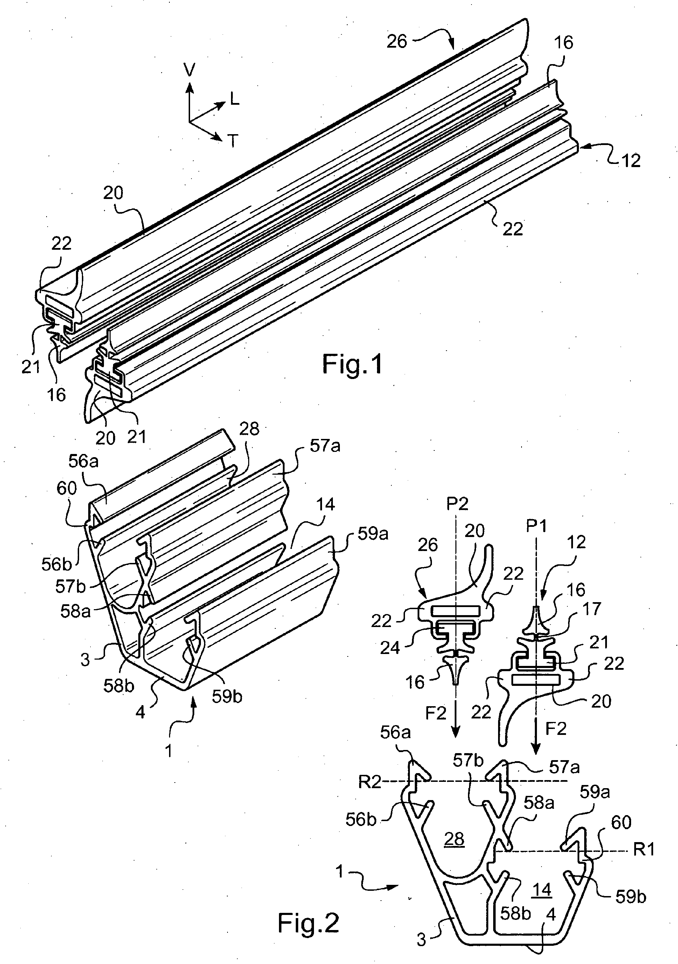

Dans la suite de la description, on adoptera à titre non limitatif des directions longitudinale, verticale et transversale indiquées sur la figure 1 par le trièdre (L, V, T) fixe par rapport au dispositif de maintien 1. La direction longitudinale L correspond à la direction principale des balais d'essuie-glaces à plat. Tel que le dispositif de maintien 1 est illustré, le plan horizontal correspond au plan (L, T). Les orientations « haut » et « bas » sont désignées en référence à l'orientation du dispositif de maintien sur la figure 1.

Le dispositif de maintien 1 est adapté pour recevoir une paire de balais d'essuie-glaces, telle que des balais plats de type Flat Blade dits de « deuxième génération », de forme courbe. Il comporte une pièce par exemple en matière plastique obtenue par extrusion, injection plastique ou par thermoformage ou toute autre matière.

Une portion d'un premier balai d'essuie-glace 12 prêt à être monté sur le dispositif de maintien 1 est représentée au dessus de celui-ci, à l'aplomb vertical d'une ouverture d'une première rainure de maintien 14 du dispositif de maintien 1.

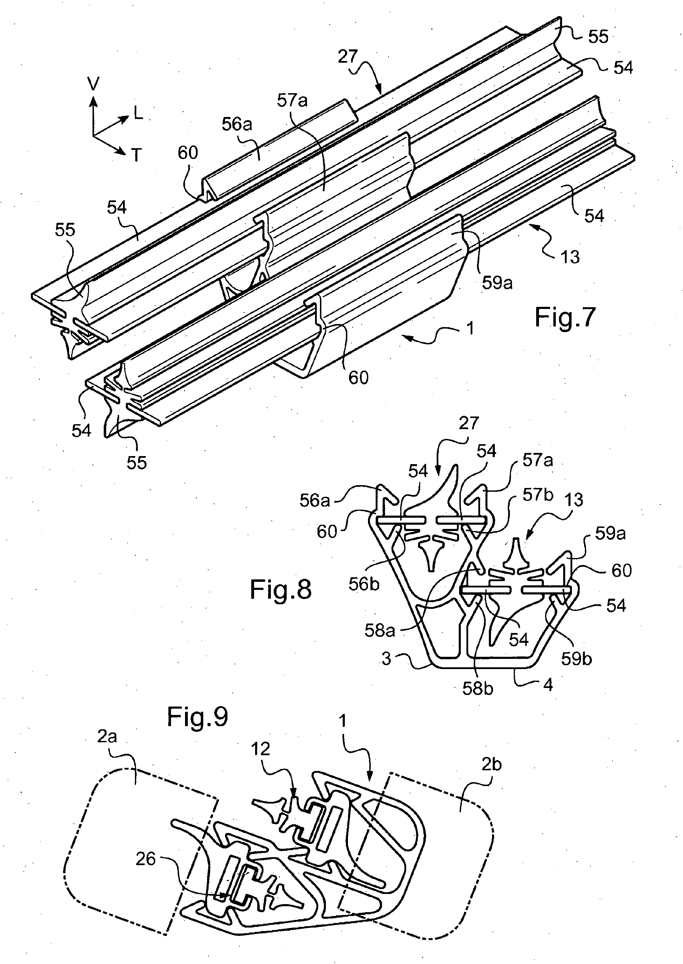

Ce premier balai 12 s'étend longitudinalement dans la direction L. Sa lame d'essuyage 16 est portée par une monture de support 20 qui par une forme aérodynamique particulière (déflecteur), peut remplir une fonction d'aileron (de l'anglais « spoiler ») visant à améliorer l'adhérence du balai 12 sur la surface vitrée. La monture de support 20 présente également un logement longitudinal intérieur permettant d'accueillir une vertèbre intérieure 21 et s'étend transversalement par deux excroissances latérales 22 surmoulées. La monture de support 20 est, par exemple, d'un seul tenant et réalisée en un matériau différent de celui de la lame d'essuyage 16. Le premier balai d'essuie-glace 12 comporte aussi, disposé approximativement en son milieu selon l'axe longitudinal, un connecteur 2a (figure 9) destiné à permettre sa connexion à un premier bras d'entraînement d'essuie-glace relié généralement à un moteur.

La lame d'essuyage 16 présente un rétrécissement longitudinal 17, désigné sous le terme charnière, lui permettant de pivoter par rapport à l'axe longitudinal L à chaque changement de sens lorsque le premier balai 12 est actionné par le bras de l'essuie-glace correspondant contre la surface vitrée. Au repos, la lame d'essuyage 16 présente un plan de symétrie longitudinale P1.

Une portion d'un second balai d'essuie-glace 26 prêt à être monté sur le dispositif de maintien 1 est représentée également au dessus de celui-ci, à l'aplomb vertical d'une ouverture d'une seconde rainure de maintien 28 du dispositif de maintien 1.

Comme le premier balai 12, ce second balai 26 de type Flat Blade s'étend longitudinalement dans la direction L. Sa lame d'essuyage 16 est portée par la monture de support 20 présentant un logement longitudinal pour une vertèbre intérieure 21 et s'étendant transversalement par deux excroissances latérales 22 surmoulées. Au repos, la lame d'essuyage 16 présente un plan de symétrie longitudinale P2.

Les rainures de maintien 14, 28 du dispositif de maintien 1 sont respectivement munies de moyens de retenue par emboîtage élastique des éléments de structure respectifs des deux balais 12, 26. Ces moyens de retenue sont ménagés sur des extensions parallèles de paroi des première et deuxième rainures de maintien 14, 28 de manière à maintenir une excroissance latérale 22 respective du balai à fixer 12, 26.

Les rainures de maintien 14, 28 sont disposées côte à côte avec une paroi verticale commune. Elles présentent respectivement deux ouvertures débouchant dans des plans parallèles R1, R2 verticalement décalés (figure 2). La deuxième rainure de maintien 28 est agencée au-dessus de la première rainure de maintien 14 et présente une forme sensiblement évasée, en « V » sur l'illustration. Par exemple, et comme représenté sur les figures, le fond de la deuxième rainure de maintien 28 est agencé sensiblement à hauteur des moyens de retenue de la première rainure de maintien 14.

Les moyens de retenue comprennent par exemple une première et une deuxième paires de pattes élastique d'accrochage 56a, 56b, 57a, 57b et 58a, 58b, 59a, 59b ménagées longitudinalement sur des extensions de parois parallèles des premier et deuxième rainures de maintien 14, 28 pour clipper les excroissances latérales 22 des montures de support 20 des balais d'essuie-glace 12, 26. Plus précisément, les paires de pattes élastiques d'accrochage 56a, 56b, 57a, 57b et 58a, 58b, 59a, 59b sont décalées verticalement et agencées en vis-à-vis, de manière à délimiter deux sillons pouvant clipper par déformation élastique les excroissances latérales 22 des montures de support des balais d'essuie-glace 12, 26. Les pattes élastiques d'accrochage 56a, 56b, 57a, 57b et 58a, 58b, 59a, 59b sont par exemple venues de matière avec le dispositif de maintien 1 par exemple par extrusion, injection plastique ou thermoformage.

En outre, le dispositif de maintien 1 peut présenter une paroi de renfort 3, raccordant entre eux les fonds les deux rainures de maintien 14, 28 pour assurer leur tenue. Le fond 4 de la première rainure de maintien 14 peut être plat (parallèle au plan (L, T)) pour poser le dispositif de maintien 1 à plat sur un poste de montage.

Le dispositif de maintien 1 peut également comporter un moyen de verrouillage maintenant les balais d'essuie-glaces dans le dispositif de maintien 1, de part et d'autre des connecteurs 2a, 2b. Le moyen de verrouillage comporte par exemple des sangles de maintien ou un moyen de sertissage, pour assurer l'inviolabilité des balais d'essuie-glace dans le dispositif de maintien 1 après insertion des balais.

Pour procéder au montage du premier balai d'essuie-glace 12 dans le dispositif de maintien 1, le monteur exerce une pression sur ce premier balai d'essuie-glace 12 vers le fond de la première rainure de maintien 14 selon une première direction d'insertion verticale (selon V). Le monteur écarte ainsi les parois de la première rainure de maintien 14 pour loger et bloquer les excroissances latérales 22 du premier balai d'essuie-glace 12 dans les moyens de retenue 58a, 58b, 59a, 59b.

L'opérateur procède ensuite au montage du second balai d'essuie-glace 26 dans le dispositif de maintien 1 par le même mode opératoire. Pour cela, il exerce une pression dans une direction F2 parallèle à la direction d'insertion F1 du premier balai 12, dans le même sens et en provenance du même côté, vers le fond de la deuxième rainure de maintien 28 du dispositif de maintien 1.

Le monteur peut bien sûr, procéder au montage du second balai d'essuie-glace 26 avant le montage du premier balai d'essuie-glaces 12.

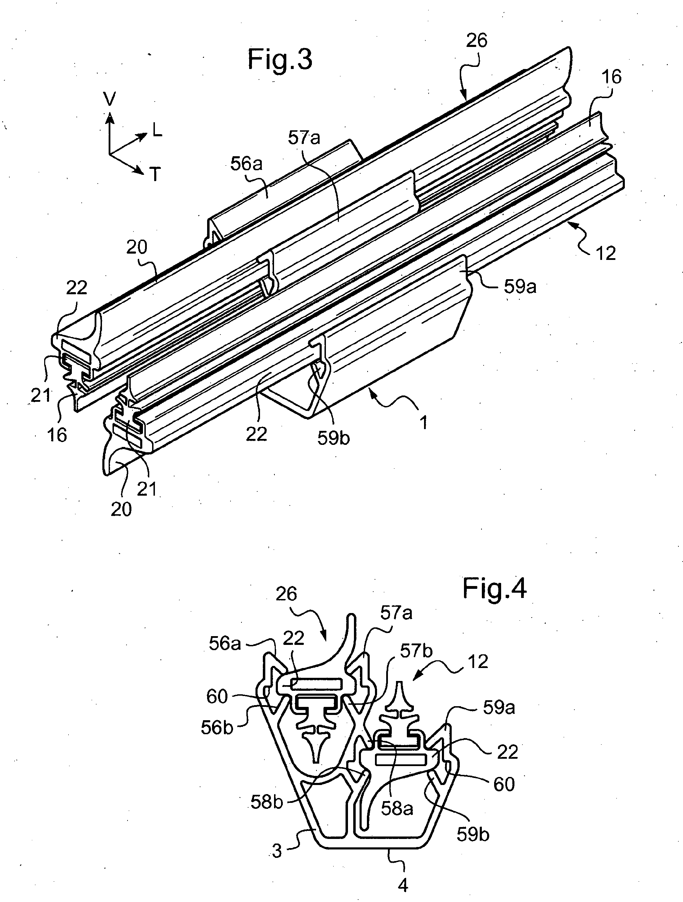

En position emboîtée de la paire de balais 12, 26 (voir figures 3, 4 et 9), les deux plans de symétrie longitudinaux P1, P2 des lames 16 des balais respectifs sont sensiblement parallèles entre eux.

Bien que la première rainure 14 du dispositif de maintien 1 reçoive le premier balai 12 avec la lame d'essuyage 16 orientée vers le haut, dans le sens contraire de la lame d'essuyage du deuxième balai 26 orientée vers le bas, on peut loger à l'inverse le premier balai 12 dans la première rainure, lame d'essuyage 16 vers le bas et le deuxième balai 26 dans la deuxième rainure, lame d'essuyage 30 vers le haut.

Toutefois, lorsque les balais d'essuie-glace sont montés tête-bêche dans le dispositif de maintien 1, c'est-à-dire en inversant l'orientation du premier et du deuxième balai, on équilibre les efforts de tenue des balais dans le(s) dispositif(s) de maintien pour un meilleur maintien à plat des balais galbés.

L'agencement des rainures de maintien 14, 28 permet l'insertion de la paire de balais 12, 26 depuis le dessus du dispositif de maintien 1, ce qui permet de gagner du temps. En effet, le monteur gagne une étape d'assemblage dans le procédé de montage de la paire de balais 12, 26 dans le ou les dispositifs de maintien 1 par rapport aux dispositifs de l'art antérieur pour lesquels le dispositif devait être retourné après la fixation d'un premier des deux balais pour la fixation du deuxième balai.

Pour bien maintenir la paire de balais 12, 26, on peut prévoir plusieurs dispositifs de maintien 1 indépendants et identiques. On prévoit par exemple deux à quatre dispositifs de maintien, régulièrement répartis de part et d'autres des connecteurs 2a, 2b. L'ensemble de maintien comportant les balais d'essuie-glace et le ou les dispositifs de maintien, peut être commercialisé tel quel en magasins, ou logé dans un étui spécifique.

La forme et l'agencement décalé des rainures de maintien rapprochent les balais d'essuie-glace entre eux, ce qui permet de réduire l'encombrement latéral de l'ensemble de maintien comportant les balais d'essuie-glace. Le conditionnement de l'ensemble de maintien en étui est ainsi facilité (figure 9).

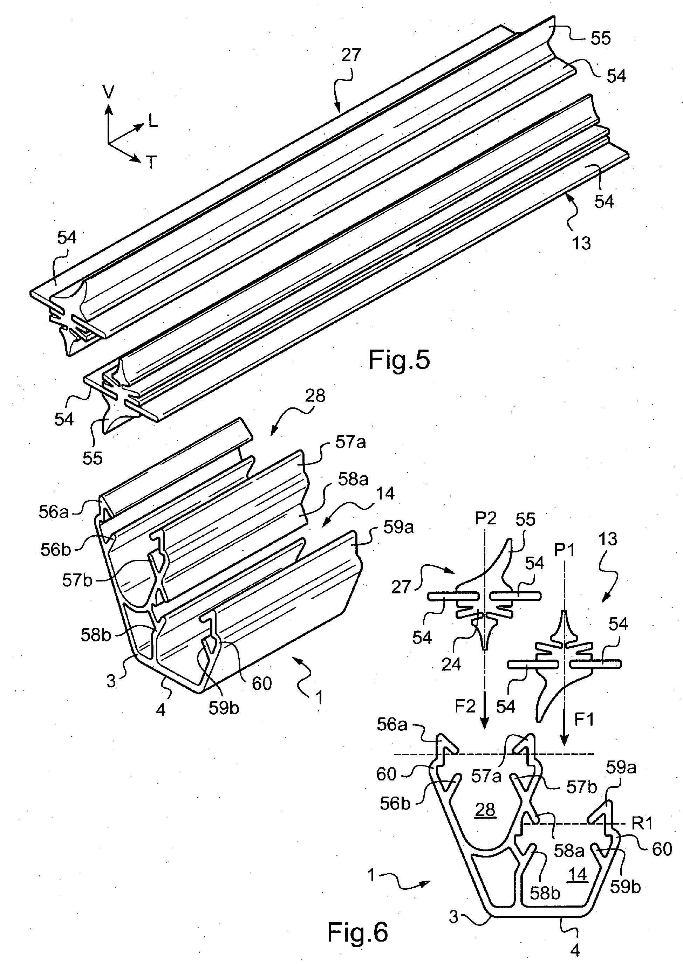

Selon un deuxième mode de réalisation des balais d'essuie-glaces représenté sur les figures 5, 6, 7 et 8, les balais d'essuie-glace 13, 27 de type balais plats, encore appelés Flat Blade, dits de « première génération », comportent respectivement deux vertèbres latérales 54 par exemple métalliques, insérées et fixées dans deux encoches latérales s'étendant longitudinalement dans la monture de support 55. En outre, la lame d'essuyage portée par l'élément de structure du balai 13, 27 est, dans cet exemple, venue de matière avec la monture de support 55.

Les moyens de retenue du dispositif de maintien 1 comprennent un épaulement longitudinal 60 prévu dans chaque paroi de rainure de maintien 14, 28 entre deux pattes élastique d'accrochage.

La deuxième rainure de maintien 28 présente ainsi un premier épaulement 60 entre les paires de pattes élastiques d'accrochage 56a et 56b et un deuxième épaulement 60 entre les paires de pattes élastiques d'accrochage 57a et 57b. Les deux épaulements 60 en vis-à-vis coopèrent avec les pattes élastiques d'accrochage inférieures 56b et 57b pour clipper par déformation élastique les vertèbres latérales 54 des montures de support des balais d'essuie-glace 13, 27 Les mêmes épaulements sont ménagés dans la première rainure de maintien 14.

Le dispositif de maintien 1 peut donc être commun à tous types de balais d'essuie-glaces. Dans le cas du montage de balais d'essuie-glace Flat Blade deuxième génération, ces épaulements 60 sont inactifs (voir figure 4).

## Revendications

1. Dispositif de maintien d'une paire de balais d'essuie-glaces (12, 26 ; 13, 27) comportant une première et une deuxième rainures de maintien (14, 28) respectivement munies de moyens de retenue par emboîtage élastique d'au moins un élément de structure (22 ; 54) à extension latérale de deux balais respectifs (12, 26 ; 13, 27), les rainures de maintien (14, 28) étant disposées côte à côte avec une paroi commune, les rainures de maintien présentant deux ouvertures respectives débouchant dans des plans parallèles et décalés (R1, R2), la deuxième rainure de maintien (28) étant agencée au-dessus de la première rainure de maintien (14) et présentant une forme sensiblement évasée, **caractérisé en ce que** lesdites ouvertures appartiennent à un même côté du dispositif de maintien.

2. Dispositif de maintien selon la revendication 1, **caractérisé en ce que** le fond de la deuxième rainure de maintien (28) est agencé sensiblement à hauteur des moyens de retenue de la première rainure de maintien (14).

3. Dispositif de maintien selon l'une des revendications 1 ou 2, **caractérisé en ce que** les moyens de retenue comprennent deux paires de pattes élastique d'accrochage (56a, 56b, 57a, 57b, 58a, 58b, 59a, 59b) ménagées longitudinalement dans les rainures de maintien respectives (14, 28) et pouvant coopérer deux à deux pour clipper les éléments de structure (22,55) à extension latérale des balais d'essuie-glace (12, 26 ; 13,27).

4. Dispositif de maintien selon la revendication 3, **caractérisé en ce que** les moyens de retenue comprennent un épaulement longitudinal (60) prévu entre chaque paire de pattes élastique d'accrochage, pouvant coopérer avec une patte élastique d'accrochage (56b, 57b, 58b, 59b) pour clipper les éléments de structure (55) à extension latérale des balais d'essuie-glace (27, 13).

5. Dispositif de maintien selon l'une des revendications précédentes, **caractérisé en ce qu'**il comporte une paroi de renfort (3) raccordant entre eux les fonds les deux rainures de maintien (14, 28).

6. Dispositif de maintien selon l'une des revendications précédentes, **caractérisé en ce qu'**il est réalisé d'une seule pièce par extrusion, injection plastique ou thermoformage.

7. Ensemble de maintien d'une paire de balais d'essuie-glaces (12, 26 ; 13, 27) comprenant : une paire de balais d'essuie-glaces (12, 26 ; 13, 27) et 5 une pluralité de dispositifs de maintien (1) selon l'une quelconque des revendications 1 à 6 répartis sur la longueur de la paire de balais d'essuie-glaces (12, 26 ; 13, 27).

8. Emballage pour une paire de balais d'essuie-glaces (12, 26 ; 13, 27), comportant un dispositif de maintien (1) selon la revendication 7.

9. Procédé de montage d'une paire de balais d'essuie-glaces (12, 26 ; 13, 27) dans un dispositif de maintien selon l'une des revendications 1 à 6 **caractérisé en ce qu'**il comporte les étapes suivantes :
- fixer un premier (12 ; 13) des deux balais (12, 26 ; 13, 27) au dispositif de maintien (1) par insertion du premier balai (12 ; 13) selon une première direction d'insertion (F1) dans une première rainure de maintien (14),
- fixer le second (26 ; 27) des deux balais (12, 26 ; 13, 27) au dispositif de maintien (1) comprenant le premier balai (12 ; 13) par insertion du deuxième balai (26 ; 27) selon une deuxième direction d'insertion (F2) en provenance du même côté que la première direction d'insertion (F1), dans une deuxième rainure de maintien (28).

10. Procédé de montage selon la revendication 9, dans lequel les balais d'essuie-glace (12, 26 ; 13, 27) sont montés tête-bêche dans le dispositif de maintien (1).

## Patentansprüche

1. Vorrichtung zum Halt eines Paars von Scheibenwischerblättern (12, 26; 13, 27), die eine erste und eine zweite Haltenut (14, 28) aufweist, die je mit Einrichtungen zum Halt durch elastisches Einstecken mindestens eines Strukturelements (22; 54) mit seitlicher Ausdehnung von zwei Wischerblättern (12, 26; 13, 27) versehen sind, wobei die Haltenuten (14, 28) nebeneinander mit einer gemeinsamen Wand angeordnet sind, wobei die Haltenuten zwei Öffnungen haben, die in parallelen und versetzten Ebenen (R1, R2) münden, wobei die zweite Haltenut (28) oberhalb der ersten Haltenut (14) angeordnet ist und eine im Wesentlichen ausgeweitete Form hat, **dadurch gekennzeichnet, dass** die Öffnungen zu einer gleichen Seite der Haltevorrichtung gehören.

2. Haltevorrichtung nach Anspruch 1, **dadurch gekennzeichnet, dass** der Boden der zweiten Haltenut (28) im Wesentlichen in Höhe der Halteeinrichtungen der ersten Haltenut (14) angeordnet ist.

3. Haltevorrichtung nach einem der Ansprüche 1 oder 2, **dadurch gekennzeichnet, dass** die Halteeinrichtungen zwei Paare von elastischen Einhaklaschen (56a, 56b, 57a, 57b, 58a, 58b, 59a, 59b) enthalten, die in Längsrichtung in den jeweiligen Haltenuten (14, 28) vorgesehen sind und paarweise zusammenwirken können, um die Strukturelemente (22, 55) mit seitlicher Ausdehnung der Scheibenwischerblätter (12, 26; 13, 27) festzuklippen.

4. Haltevorrichtung nach Anspruch 3, **dadurch gekennzeichnet, dass** die Halteeinrichtungen eine zwischen jedem Paar von elastischen Einhaklaschen vorgesehene Längsschulter (60) enthalten, die mit einer elastischen Einhaklasche (56b, 57b, 58b, 59b) zusammenwirken kann, um die Strukturelemente (55) mit seitlicher Ausdehnung der Scheibenwischerblätter (27, 13) festzuklippen.

5. Haltevorrichtung nach einem der vorhergehenden Ansprüche, **dadurch gekennzeichnet, dass** sie eine Verstärkungswand (3) aufweist, die die Böden der zwei Haltenuten (14, 28) miteinander verbindet.

6. Haltevorrichtung nach einem der vorhergehenden Ansprüche, **dadurch gekennzeichnet, dass** sie aus einem Stück durch Extrudieren, Kunststoffspritzen oder Thermoformen hergestellt wird.

7. Halteeinheit eines Paars von Scheibenwischerblättern (12, 26; 13, 27), die enthält: ein Paar von Scheibenwischerblättern (12, 26; 13, 27) und eine Vielzahl von Haltevorrichtungen (1) nach einem der Ansprüche 1 bis 6 verteilt über die Länge des Paars von Scheibenwischerblättern (12, 26; 13, 27).

8. Verpackung für ein Paar von Scheibenwischerblättern (12, 26; 13, 27), die eine Haltevorrichtung (1) nach Anspruch 7 aufweist.

9. Verfahren zur Montage eines Paars von Scheibenwischerblättern (12, 26; 13, 27) in eine Haltevorrichtung nach einem der Ansprüche 1 bis 6, **dadurch gekennzeichnet, dass** es die folgenden Schritte aufweist:
- Befestigen eines ersten (12; 13) der zwei Wischerblätter (12, 26; 13, 27) an der Haltevorrichtung (1) durch Einführen des ersten Wischerblatts (12; 13) gemäß einer ersten Einführrichtung (F1) in eine erste Haltenut (14),
- Befestigen des zweiten (26; 27) der zwei Wischerblätter (12, 26; 13, 27) an der das erste Wischerblatt (12; 13) enthaltenden Haltevorrichtung (1) durch Einführen des zweiten Wischerblatts (26; 27) gemäß einer zweiten Einführrichtung (F2) von der gleichen Seite wie die erste Einführrichtung (F1) kommend in eine zweite Haltenut (28).

10. Montageverfahren nach Anspruch 9, bei dem die Scheibenwischerblätter (12, 26; 13, 27) Kopf bei Fuß in die Haltevorrichtung (1) montiert werden.

## Claims

1. Device for supporting a pair of windscreen wiper blades (12, 26; 13, 27) comprising a first and a second supporting grooves (14, 28) respectively provided with retaining means based on the elastic fitting of at least one laterally extending structural element (22; 54) of two respective blades (12, 26; 13, 27), the supporting grooves (14, 28) being arranged side by side with a common wall, the supporting grooves having two respective openings emerging in planes that are parallel and offset (R1, R2), the second supporting groove (28) being arranged above the first supporting groove (14) and having a substantially flared form, **characterized in that** said openings belong to one and the same side of the supporting device.

2. Supporting device according to Claim 1, **characterized in that** the bottom of the second supporting groove (28) is arranged substantially at the height of the retaining means of the first supporting groove (14).

3. Supporting device according to one of Claims 1 or 2, **characterized in that** the retaining means comprise two pairs of elastic coupling tabs (56a, 56b, 57a, 57b, 58a, 58b, 59a, 59b) formed longitudinally in the respective supporting grooves (14, 28) and being able to cooperate in pairs to clip the laterally extending structural elements (22, 25) of the windscreen wiper blades (12, 26; 13, 27).

4. Supporting device according to Claim 3, **characterized in that** the retaining means comprise a longitudinal shoulder (60) provided between each pair of elastic coupling tabs, being able to cooperate with an elastic coupling tab (56b, 57b, 58b, 59b) to clip the laterally extending structural elements (55) of the windscreen wiper blades (27, 13).

5. Supporting device according to one of the preceding claims, **characterized in that** it comprises a reinforcing wall (3) connecting the bottoms of the two supporting grooves (14, 28).

6. Supporting device according to one of the preceding claims, **characterized in that** it is produced in a single piece by extrusion, plastic injection or thermoforming.

7. Assembly for supporting a pair of windscreen wiper blades (12, 26; 13, 27) comprising: a pair of windscreen wiper blades (12, 26; 13, 27) and a plurality of supporting devices (1) according to any one of Claims 1 to 6, distributed over the length of the pair of windscreen wiper blades (12, 26; 13, 27).

8. Packaging for a pair of windscreen wiper blades (12, 26; 13, 27) comprising a supporting device (1) according to Claim 7.

9. Method for mounting a pair of windscreen wiper blades (12, 26; 13, 27) in a supporting device according to one of Claims 1 to 6, **characterized in that** it comprises the following steps:
- fixing a first (12; 13) of the two blades (12, 26; 13, 27) to the supporting device (1) by insertion of the first blade (12; 13) in a first direction of insertion (F1) into a first supporting groove (14),
- fixing the second (26; 27) of the two blades (12, 26; 13, 27) to the supporting device (1) comprising the first blade (12; 13) by insertion of the second blade (26; 27) in a second direction of insertion (F2) from the same side as the first direction of insertion (F1), into a second supporting groove (28).

10. Mounting method according to Claim 9, in which the windscreen wiper blades (12, 26; 13, 27) are mounted head-to-tail in the supporting device (1).
